# EUROPÄISCHE PATENTSCHRIFT

(11) **EP 2 912 086 B1**
(45) Veröffentlichungstag und Bekanntmachung des Hinweises auf die Patenterteilung: **28.08.2019**
(21) Anmeldenummer: 13783028.7
(22) Anmeldetag: 22.10.2013
(51) Int. Cl.: C08G 18/67, C08F 290/06, C08G 18/32, C08L 75/16

(54) **VERFAHREN ZUR HERSTELLUNG VON VINYLESTERURETHANHARZEN AUF BASIS VON DIANHYDROHEXITOL-VERBINDUNGEN UND IHRE VERWENDUNG**
METHOD FOR PRODUCING VINYL ESTER URETHANE RESINS BASED ON DIANHYDROHEXITOL COMPOUNDS AND USE THEREOF
PROCÉDÉ DE PRODUCTION DE RÉSINES VINYLESTER-URÉTHANE À BASE DE COMPOSÉS DE DIANHYDROHEXITOL ET LEUR UTILISATION

(30) Priorität: 24.10.2012 DE 102012219477
(43) Veröffentlichungstag der Anmeldung: 02.09.2015
(73) Patentinhaber: Hilti Aktiengesellschaft, 9494 Schaan (LI)
(72) Erfinder: LEITNER, Michael, 86899 Landsberg (DE); GNASS, Beate, 86368 Gersthofen (DE)
(86) Internationale Anmeldenummer: PCT/EP2013/072058
(87) Internationale Veröffentlichungsnummer: WO 2014/064097

(56) Entgegenhaltungen:
- EP-A1- 0 713 015
- EP-A1- 2 433 975

## Beschreibung

Die Erfindung betrifft ein Verfahren zur Herstellung von Urethan(meth)acrylatharzen auf Basis von Dianhydrohexitol-Verbindungen, die nach diesem Verfahren hergestellten Urethan(meth)acrylatharze und ihre Verwendung als radikalisch aushärtbare Bindemittel, insbesondere für die chemische Befestigung.

Die Verwendung von Reaktionsharzmörteln auf Basis radikalisch härtbarer Verbindungen als Bindemittel ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente die Harzmischung und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze und ungesättigte Polyesterharze eingesetzt.

Als Basisharze werden aufgrund ihrer vorteilhaften Eigenschaften Vinylesterharze und insbesondere Urethan(meth)acrylatharze eingesetzt, die durch monomere oder polymere aromatische Diisocyanate und Hydroxy-substituierte Methacrylate, wie Hydroxyalkylmethacrylat erhältlich sind. Die EP 0713015 B1 beispielsweise beschreibt Dübelmassen mit ungesättigten Polyesterharzen, Vinylesterharzen einschließlich Urethan(meth)acrylatharze als Basisharze. Die Verbindungen derartiger Systeme basieren auf der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Die Erfinder haben einen Weg gefunden, einen Reaktionsharzmörtel bereitzustellen, dessen Harzkomponente ein Basisharz und ggf. weitere Bestandteile, wie Reaktivverdünner, enthält, die einen sehr hohen Anteil an Kohlenstoff aus nachwachsenden Rohstoffen aufweisen. Dies wird ermöglicht, indem als Basisharz ein Urethan(meth)acrylatharz auf Basis einer Dianhydrohexitol-Verbindung, wie Isosorbid, Isomannit oder Isoidid verwendet wird. Dies hat den Vorteil, dass zur Synthese des Basisharzes auf Ausgangsverbindungen zurückgegriffen werden kann, die in ausreichender Menge und Qualität aus nachwachsenden Rohstoffen erhalten werden können.

Isosorbid basierte Polymere können beispielsweise aus Isosorbid und Dicarbonsäuren hergestellt werden (Bart A. J. Noordover: Biobased step-growth polymers; chemistry, functionality and applicability; Technische Universiteit Eindhoven, 2007; ISBN 978-90-386-1179-2). Hier werden die entsprechenden Polyester in Masse hergestellt wobei aber nur relativ geringe Molmassen mit einem Zahlenmittel der Molmasse *M̅ₙ* von unter 5.000g/mol erhalten werden. Derartige Polymere weisen allerdings keine polymerisationsfähigen Kohlenstoffdoppelbindungen auf, so dass auf diese Weise keine vernetzten Duromere entstehen.

Weiterhin lassen sich Isosorbid-basierte Polymere durch Polykondensation von Isosorbiddiglycidylethern mit beispielsweise Aminen erhalten (Xianhong Feng, Anthony J. East, Willis Hammond, Michael Jaffe: Contemporary Science of Polymeric Materials by Korugic-Karasz, L.; ACS Symposium Series; American Chemical Society: Washington, DC, 2010). Allerdings bedingt die Herstellung derartiger Isosorbid-diglycidylether den Einsatz von m-Chlorperbenzoesäure in Dichlormethan, was für industrielle Zwecke ein sehr aufwendiges und kostspieliges Verfahren darstellt.

Alternativ lässt sich Bisisosorbiddiglycidylether durch die Reaktion von Isosorbid mit Epichlorhydrin erhalten, mit der Möglichkeit Isosorbid-basierte Polymere durch Polykondensation von Bisisosorbiddiglycidylethern mit beispielsweise Aminen zu erhalten. Hier ist die Reaktion von Isosorbid mit Epichlorhydrin und die Produktisolierung allerdings ein sehr aufwendiges Verfahren.

Das von den Erfindern bereitgestellte Basisharz ist jedoch nicht einfach in der Herstellung. Die synthetisierten Dianhydrohexitol-basierten Vinylesterharze sind wegen der geringen Löslichkeit der während der Synthese der Zwischenverbindung, die durch Umsetzen der Dianhydrohexitol-Verbindung mit einem leichten Überschuss an Diisocyanat erhältlich ist, entstehenden oligomeren Diisocyanate nur schwer zugänglich. Insbesondere die Umsetzung eines C4-Diisocyanates mit einer Dianhydrohexitol-Verbindung gelang bisher in der Masse nicht. Ähnlich verhält es sich auch mit den C6- und C10-Diisocyanaten, die sich bisher in Masse kaum mit einer Dianhydrohexitol-Verbindung zum entsprechenden Diisocyanat umsetzen lassen.

Es besteht daher Bedarf an einem Verfahren, das einfach durchzuführen ist und zu hohen Ausbeuten führt, bei dem insbesondere keine Aufarbeitung oder Abtrennung des Endprodukts erforderlich ist, so dass der Reaktionsansatz direkt eingesetzt werden kann.

Aufgabe der Erfindung ist die Bereitstellung eines Verfahrens zur Herstellung von Urethan(meth)acrylatharzen das einfach durchzuführen und zu kontrollieren ist und das hohe Ausbeuten an Endprodukt ermöglicht.

Erfindungsgemäß wird die Aufgabe dadurch gelöst, dass ein Verfahren zur Herstellung von Urethan(meth)acrylatharzen bereitgestellt wird, bei dem eine Dianhydrohexitol-Verbindung mit einem Diisocyanat in Gegenwart einer radikalisch co-polymerisierbaren Verbindung als Lösungsmittels umgesetzt wird und das Produkt daraus mit einem Hydroxy-substituierten (Meth)acrylat umgesetzt wird.

Dementsprechend erfolgt die Herstellung der Urethan(meth)acrylatharze in einer einfachen Zweistufen-Eintopfreaktion, aus der ein für alle Anwendungsgebiete direkt einsetzbares und lagerstabiles Produkt resultiert.

Die Herstellung der Urethan(meth)acrylatharze erfolgt erfindungsgemäß in zwei Synthesestufen. In einer ersten Synthesestufe (Synthesestufe 1) wird die Dianhydrohexitol-Verbindung mit einem Überschuss an Diisocyanat umgesetzt, so dass die Produkte notwendigerweise Isocyanatgruppen am Ende des Moleküls und zwei Urethangruppen in der Hauptkette des Moleküls aufweisen. Zweckmäßig werden pro Mol Dihydroxyverbindung mindestens zwei Mole Diisocyanat eingesetzt, so dass jeweils eine Isocyanatgruppe des Diisocyanats mit einer Hydroxygruppe der Dianhydrohexitol-Verbindung unter Bildung einer Urethangruppe reagiert. Bevorzugt wird jedoch das Diisocyanat im leichten Überschuss zugegeben, um eine Oligomerisierung weitgehend zu verhindern. Dennoch werden, wenn auch im geringen Maße Oligomere gebildet. Die Isocyanat-Endgruppen werden dann in einer zweiten Synthesestufe (Synthesestufe 2) mit einem Hydroxy-substituierten (Meth)acrylatester umgesetzt, wodurch eine Verbindung mit endständigen (Meth)acrylatgruppen erhalten wird.

Erstaunlicherweise führt der Einsatz bestimmter monomerer co-polymerisierbarer Verbindungen bereits während der erste Synthesestufe zu guten und sehr guten Umsätzen in dieser Synthesestufe, so dass anschließend in der zweiten Synthesestufe die beiden endständigen Isocyanatgruppen des Dianhydrohexitol-basierten Urethandiisocyanates gut mit Hydroxy-substituierten (Meth)acrylaten umgesetzt werden können. Hieraus resultieren polymerisationsfähige Harze in hohen Ausbeuten.

Die Verwendung von bestimmten monomeren co-polymerisierbaren Verbindungen bereits während der ersten Synthesestufe ist erstaunlicherweise behilflich, die während der Reaktion entstehenden Oligomere soweit in Lösung zu halten, dass die Umsetzung der Dianhydrohexitol-Verbindung in dieser Synthesestufe vollständig verläuft. Dies ist die Voraussetzung dafür, dass die endständigen Isocyanatgruppen mit Hydroxy-substituierten (Meth)acrylaten in der zweiten Synthesestufe zu den entsprechenden Di(meth)acrylaten umgesetzt werden.

Die Umsetzung der Dianhydrohexitol-Verbindung mit dem Diisocyanat erfolgt in an sich bekannter Weise durch Zusammenfügen der Komponenten.

Die Umsetzung erfolgt erfindungsgemäß in Gegenwart eines co-polymerisierbaren Monomeren als Lösungsmittel, wobei dieses unter mono- oder difunktionellen Methacrylaten, insbesondere aliphatische oder aromatische C₅-C₁₅-(Meth)acrylate ausgewählt ist. Geeignete co-polymerisierbare Monomere sind: Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat; PEG-Di(meth)acrylate, wie PEG200-Di(meth)acrylat, Tetraehtylenglycoldi(meth)acrylat, (2,2-Dimethyl-1,3-dioxolan-4-yl)methyl(meth)acrylat, Cyclohexyl(meth)acrylat, Phenoxyethyldi(meth)acrylat, Methoxyethyl(meth)acrylat, Tetrahydrofurfurylmethacrylat oder *tert*-Butyl(meth)acrylat und Norbornyl(meth)acrylat. Besonders bevorzugt ist das co-polymerisierbare Monomere unter Butandioldi(meth)acrylat, Propylenglykoldi(meth)acrylat, Tetrahydrofurfuryl(meth)acrylat oder (2,2-Dimethyl-1,3-dioxolan-4-yl)methyl(meth)acrylat ausgewählt. Das co-polymerisierbare Monomer kann alleine oder als Gemisch aus zwei oder mehreren davon verwendet werden.

Die Dianhydrohexitol-Verbindung, das Diisocyanat und das Lösungsmittel werden bei Raumtemperatur, insbesondere bei +10°C bis +-40°C, im Reaktionskessel, vorzugsweise unter Rühren, vorgelegt und vermischt.

Die Umsetzung erfolgt dann bei etwa +60°C bis +90°C, wobei das Gemisch so schnell wie möglich auf diese Temperatur erhitzt wird, um ein Kleben des Gemisches an dem Reaktionskessel oder dem Rührer, zu verhindern. Bevorzugt erfolgt das Erhitzen über einen Zeitraum von 30 Minuten bis 3 Stunden, abhängig von der vorliegenden Menge.

Die Umsetzung der Dianhydrohexitol-Verbindung mit dem Diisocyanat wird bevorzugt in Gegenwart eines geeigneten Katalysators durchgeführt. Geeignete Katalysatoren sind organische Metallsalze und Chelate, wie Chrom(III)dionat, Chrom(III)octoat, Titantetrabutoxid, Calciumoctoat, Bismuthcarboxylat, Zirkoniumacetoacetat, Zirkoniumtetradionat-Komplex und Zirkoniumtetrakis(2,4-pentandionato)-Komplex, wie in der Publikation "Catalysis of the Isocyanate-Hydroxyl Reaction with Non-Tin Catalysts" von W. J. Blank. Z. A. He and E. T. Hessell, 24th International Conference in Organic Coatings, Athens Greece beschrieben, oder Zirkoniumalkoxide, wie Zirkoniumtetrabutoxid, und Zirkoniumcarboxylate, wie Zirkoniumtetraacetylacetonat, wie in der WO 2012/076686 A1 beschrieben. Bevorzugt werden die üblich verwendeten Zinnverbindungen, wie Dioctylzinndilaurat verwendet.

Damit die Ausgangsverbindungen aus nachwachsenden Rohstoffen erhalten werden können, ist die Dihydroxyverbindung eine Dianhydrohexitol-Verbindung. Dianhydrohexitol-Verbindungen, genauer 1,4:3,6-Dianhydrohexitol-Verbindungen, sind Nebenprodukte der Stärkeindustrie. Sie sind beispielsweise durch Dehydrierung von D-Hexitolen erhältlich, die wiederum durch einfache Reduktion aus Hexosezuckern erhältlich sind. Die Dianhydrohexitol-Verbindungen sind somit aus Biomasse erhältliche, chirale Produkte. Abhängig von der Konfiguration der zwei Hydroxygruppen wird zwischen drei Isomeren unterschieden, dem Isosorbid (Struktur A), dem Isomannit (Struktur B) und dem Isoidid (Struktur C), die durch Hydrogenierung und anschließende doppelte Dehydrierung aus der D-Glucose, D-Mannose bzw. der L-Fructose erhältlich sind.

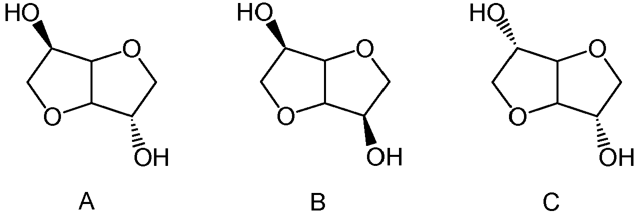

Bei der als Ausgangsstoff verwendeten Dianhydrohexitol-Verbindung kann es sich somit um ein Isosorbid, Isomannit oder Isoidid oder um ein Gemisch dieser Dianhydrohexitol-Verbindungen handeln. Im Folgenden ist demnach unter dem Begriff Dianhydrohexitol-Verbindung die jeweilige diskrete Verbindung wie auch ein beliebiges Gemisch der verschiedenen Einzelverbindungen zu verstehen. Nachdem das Isosorbid am weitesten verbreitet ist, wird es bevorzugt als Ausgangsverbindung für die Umsetzung mit dem Diisocyanat verwendet.

Die Dianhydrohexitol-Verbindungen und Verfahren zu ihrer Herstellung sind an sich bekannt und entsprechende Produkte sind am Markt verfügbar.

Damit auch das Diisocyanat aus nachwachsenden Rohstoffen erhalten werden kann, ist zweckmäßig das Diisocyanat ein aliphatisches Diisocyanat, insbesondere ein aliphatisches C₁-C₁₀-Alkyldiisocyanat auf Basis eines Kohlenstoffgrundbausteins, der aus nachwachsenden Rohstoffen erhältlich ist, wie Tetramethylendiisocyanat, Hexamethylendiisocyanat oder Decamethylendiisocyanat.

Die Verwendung von Tetramethylendiisocyanat beispielsweise hat den Vorteil, dass es aus einem C4-Grundbaustein pflanzlichen Ursprungs, nämlich der Bernsteinsäure, erhältlich ist (Chemical Engineering & Technology Special Issue: Change of raw materials, Volume 31, Issue 5, pages 647 (2008) in dem Artikel "Succinic Acid: A New Platform Chemical for Biobased Polymers from Renewable Resources" von I. Bechthold, K. Bretz, S. Kabasci, R. Kopitzky und A. Springer). Die Autoren gehen davon aus, dass Bernsteinsäure eine der zukünftigen Grundchemikalien sein wird, die aus nachwachsenden Rohstoffen erhältlich ist.

Die Verwendung von Decamethylendiisocyanat als weiteres Beispiel hat ebenfalls den Vorteil, dass es aus einem C10-Grundbaustein pflanzlichen Ursprungs, nämlich der Sebacinsäure, erhältlich ist. Der aus biobasiertem Rizinusöl erhältliche C10-Grundbaustein ist eingehend in der Literatur beschrieben (European Journal of Lipid Science and Technology, Special Issue: Oil and fats as renewable resources for the chemical industry, Volume 112, Issue 1, pages 10 (2010), in dem Artikel "Castor oil as a renewable resource for the chemical industry" von Hatice Mutlu und Michael A. R. Meier). Auch hier gehen die Autoren davon aus, dass Rizinusöl eine sehr wertvolle Quelle für nachwachsende Rohstoffe für die chemische Industrie ist.

Daneben ist mittlerweile auch das Hexamethylendiisocyanat (HMDI) aus nachwachsenden Rohstoffen zugänglich, da gemäß dem Patent US 8,241,879 die entsprechende Vorstufe, Adipinsäure aus Biomasse zugänglich ist.

Daneben können aber auch andere Diisocyanate, die aus nachwachsenden Rohstoffen erhältlich sind, erfindungsgemäß eingesetzt werden, wie beispielsweise Diisocyanate aus Fettsäuren oder aus anderen Quellen, wie in der WO 2011/098272 A2 beschrieben.

Erfindungsgemäß wird die Reaktion der Dianhydrohexitol-Verbindung mit dem Diisocyanat solange fortgesetzt, bis die Umsetzung vollständig erfolgt ist. Der Umsatz wird während der Reaktion durch Dünnschichtchromatographie fortlaufend ermittelt.

Das Urethan(meth)acrylatharz wird in der zweiten Stufe durch Umsetzen der in der ersten Synthesestufe erhaltenen Diisocyanat-Verbindung mit Hydroxy-substituierten (Meth)acrylaten erhalten. Pro Isocyanatäquivalent der Diisocyanat-Verbindung werden ein Hydroxyäquivalent an Hydroxy-substituiertem (Meth)acrylat eingesetzt.

Die Umsetzung erfolgt ebenfalls bei etwa +60 bis +90°C, wobei das Hydroxy-substituierte (Meth)acrylat direkt zu dem Reaktionsgemisch aus der ersten Synthesestufe gegeben wird, ohne dass die entstehenden Produkte isoliert werden.

Nach Zugabe des Hydroxy-substituierten (Meth)acrylats wird das Reaktionsgemisch solange bei der Reaktionstemperatur von +60°C bis +90°C gehalten, bis der Isocyanatrestgehalt unter 0,2% abgesunken ist. Die Umsatzkontrolle erfolgt durch Titration der Isocyanatgruppen nach DIN EN 1242. Nach beendeter Umsetzung wird das Reaktionsgemisch auf Raumtemperatur abgekühlt.

Auch die Hydroxy-substituierten (Meth)acrylate können aus nachwachsenden Rohstoffen erhalten werden. Insbesondere handelt es sich dabei um aliphatische Hydroxyalkyl(meth)acrylate, wie Hydroxypropyl(meth)acrylat oder Hydroxyethyl(meth)acrylat, wovon die Methacrylat-Verbindungen besonders bevorzugt sind.

Der zur Synthese des Hydroxypropylmethacrylats erforderliche Propylenglykol kann aus Glycerin erhalten werden (CEPmagazine.org, www.aiche.org/cep (August 2007), in dem Artikel "A Renewable Route to Propylene Glycol" von Suzanne Shelley). Glycerin ist ein wesentliches Nebenprodukt der Herstellung von Biodiesel. Damit ist es für die Herstellung von Propylenglykol eine billige, nachhaltige und umweltfreundliche Alternative zu dem herkömmlichen Rohstoff, der aus Erdöl gewonnen wird.

Der zur Synthese des Hydroxyethylmethacrylats erforderliche Ethylenglykol kann ebenfalls aus Rohstoffen, wie Ethylenoxid und Derivate davon, etwa Glykole, die aus Biomasse, wie Molasse oder Zuckerrohr, erhältlich sind, gewonnen werden.

Die C₂- und C₃-Hydroxyalkylmethacrylate sind am Markt verfügbar.

Daneben können aber auch andere Hydroxy-substituierte (Meth)acrylate, die aus nachwachsenden Rohstoffen erhältlich sind, erfindungsgemäß eingesetzt werden.

Um eine vorzeitige unerwünschte Polymerisation der polymerisierbaren, erfindungsgemäß hergestellten Reaktionsprodukte und der verwendeten co-polymerisierbaren Monomere während des gesamten Herstellungsprozesses und während der Lagerung des Reaktionsproduktes zu bewahren, empfiehlt es sich, bereits vor der Reaktion wenigstens 0,0005 bis 0,2 Gew.-%, bezogen auf das gesamte Reaktionsgemisch, einschließlich etwaiger Hilfs- und Zusatzmittel, an mindestens einem geeigneten Polymerisationsinhibitor zuzugeben. Der mindestens eine Polymerisationsinhibitor kann aber auch während oder nach der Umsetzung zugegeben werden. Der Polymerisationsinhibitor kann, falls erforderlich, bis zu einer Menge von 2 Gew.-%, bevorzugt 0,01 bis 1 Gew.-%, bezogen auf das gesamte Reaktionsgemisch, zugegeben werden.

Geeignete Polymerisationsinhibitoren sind Hydrochinon, substituierte Hydrochinone, Phenothiazin, Benzochinon oder *tert*-Butylbrenzkatechin, wie sie beispielsweise in der EP 1935860 A1 oder EP 0965619 A1 beschrieben werden, stabile Nitroxylradikalen, auch *N-*Oxyl-Radikale genannt, wie Piperidinyl-*N*-oxyl oder Tetrahydropyrrol-*N*-oxyl, wie sie beispielsweise in der DE 19531649 A1 beschrieben werden.

Die erfindungsgemäß hergestellten Produkte stellen wertvolle, mittels geeigneter Radikale liefernden Substanzen wie (Hydro)Peroxiden, gegebenenfalls in Gegenwart von Beschleunigern, aushärtbare Systeme dar.

Bevorzugt werden die erfindungsgemäß hergestellten Produkte als Bindemittelkomponenten für Klebe-, Haft-, Dicht- und Beschichtungsmittel eingesetzt. Besonders bevorzugt werden die erfindungsgemäß hergestellten Produkte als Bindemittel für radikalisch härtbare, insbesondere kalthärtende Mörtelmassen zur chemischen Befestigung verwendet.

Ein weiterer Gegenstand der Erfindung ist daher die Verwendung des erfindungsgemäß hergestellten Urethan(meth)acrylatharzes als Bindemittel in radikalisch härtbaren Harzmischungen und diese Harzmischung enthaltende Reaktionsharzmörtel-Zusammensetzungen, insbesondere zur chemischen Befestigung.

Reaktionsharzmörtel werden in der Regel herstellt, indem die zur Herstellung des Basisharzes erforderlichen Ausgangsverbindungen gegebenenfalls zusammen mit Katalysatoren und Lösungsmitteln, insbesondere Reaktivverdünner, in einem Reaktor gegeben und miteinander zur Reaktion gebracht werden. Nach Beendigung der Reaktion und gegebenenfalls bereits zu Beginn der Reaktion werden zu dem Reaktionsgemisch Polymerisationsinhibitoren für die Lagerstabilität gegeben, wodurch der sogenannte Harz-Masterbatch erhalten wird. Zu dem Harz-Masterbatch werden häufig Beschleuniger für die Härtung des Basisharzes, gegebenenfalls weitere Polymerisationsinhibitoren, die gleich oder ungleich dem Polymerisationsinhibitor für die Lagerstabilität sein können, zur Einstellung der Gelzeit, und gegebenenfalls weiteres Lösungsmittel, insbesondere Reaktivverdünner, gegeben, wodurch die Harzmischung erhalten wird. Diese Harzmischung wird zur Einstellung verschiedener Eigenschaften, wie der Rheologie und der Konzentration des Basisharzes, mit anorganischen und/oder organischen Zuschlagstoffen versetzt, wodurch der Reaktionsharzmörtel erhalten wird.

Eine bevorzugte Harzmischung enthält dementsprechend mindestens ein Basisharz, mindestens einen Reaktivverdünner, mindestens einen Beschleuniger, mindestens einen Polymerisationsinhibitoren. Ein Reaktionsharzmörtel enthält neben der eben beschriebenen Harzmischung anorganische und/oder organische Zuschlagstoffe, wobei anorganische Zuschlagstoffe besonders bevorzugt sind.

Das erfindungsgemäße Verfahren soll in den nachfolgenden Beispielen näher erläutert werden, ohne darauf beschränkt zu werden.

### AUSFÜHRUNGSBEISPIELE

### A) Harz-Masterbatch Synthesen

### A1) Verwendung von Tetramethylendiisocyanat (TMDI)

### Beispiel A1.1

In einen 500mL Dreihalskolben werden 260g 1,3-Propandioldimethacrylat (Sarbio6200) und 50g TMDI vorgelegt und mit 30mg Dioctylzinndilaurat (Tegokat216), 20mg BHT sowie 40mg Tempol versetzt. Die Lösung wird bei 70°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 80°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 50g HPMA über einen Zeitraum von 60min zugetropft, und weiter bei 80°C solange gerührt, bis der NCO Gehalt bei weniger als 0,2% liegt, gemessen nach DIN EN 1242. Man erhält so einen gebrauchsfertigen Harz-Masterbatch.

### Beispiel A1.2

In einen 500mL Dreihalskolben werden 250g 1,4-Butandioldimethacrylat und 40g TMDI vorgelegt und mit 60mg Dioctylzinndilaurat (Tegokat216), 40mg BHT sowie 90mg Tempol versetzt. Die Lösung wird bei 70°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 80°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 40g HPMA über einen Zeitraum von 60min zugetropft, und weiter bei 80°C solange gerührt, bis der NCO Gehalt bei weniger als 0,2% liegt, gemessen nach DIN EN 1242. Man erhält so einen gebrauchsfertigen Harz-Masterbatch.

### A2) Verwendung von Hexamethylendiisocyanat (HMDI)

### Beispiel A2.1

In einen 500mL Dreihalskolben werden 130g 1,3-Propandioldimethacrylat (Sarbio6200), 130g 1,4-Butandioldimethacrylat und 50g HMDI vorgelegt und mit 30mg Dioctylzinndilaurat (Tegokat216), 20mg BHT sowie 40mg Tempol versetzt. Die Lösung wird bei 70°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 80°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 50g HPMA über einen Zeitraum von 60min zugetropft, und weiter bei 80°C solange gerührt, bis der NCO Gehalt bei weniger als 0,2% liegt, gemessen nach DIN EN 1242. Man erhält so einen gebrauchsfertigen Harz-Masterbatch.

### Beispiel A2.2

In einen 500mL Dreihalskolben werden 250g (2,2-Dimethyl-1,3-dioxolan-4-yl)methyl methacrylat (Solketalmethacrylat) und 45g HMDI vorgelegt und mit 30mg Dioctylzinndilaurat (Tegokat216), 30mg BHT sowie 40mg Tempol versetzt. Die Lösung wird bei 70°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 80°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Anschließend werden 45g HPMA über einen Zeitraum von 60min zugetropft, und weiter bei 80°C solange gerührt, bis der NCO Gehalt bei weniger als 0,2% liegt, gemessen nach DIN EN 1242. Man erhält so einen gebrauchsfertigen Harz-Masterbatch.

### A3) Verwendung von Decamethylendiisocyanat (DMDI)

### Beispiel A3.1

In einen 500mL Dreihalskolben werden 230g 1,3-Propandioldimethacrylat (Sarbio6200; Sartomer) und 60g DMDI vorgelegt und mit 60mg Dioctylzinndilaurat (Tegokat216; Goldschmidt Industrial Chemical Corporation), 40mg Butylhydroxytoluol (BHT) sowie 90mg 4-Hydroxy-2,2,6,6-tetramethylpiperidin-N-oxl (Tempol) versetzt. Die Lösung wird bei 70°C temperiert. Dann werden über einen Zeitraum von 60min 20g Isosorbid in 20 gleich großen Portionen der gerührten Lösung zugegeben. Nach Beendigung der Zugabe des Isosorbid wird die Mischung auf 80°C erwärmt und 5h bei dieser Temperatur gerührt. Mittels Dünnschichtchromatographie wird die Umsetzung des Isosorbid kontrolliert. Nach 5h war die Umsetzung des Isosorbid vollständig. Zur Viskositätsabsenkung der Mischung wird mit 35g Tetrahydrofurfuryl-methacrylat (Sarbio6100; Sartomer) verdünnt. Anschließend werden 40g HPMA über einen Zeitraum von 60min zugetropft, und weiter bei 80°C solange gerührt, bis der NCO Gehalt bei weniger als 0,2% liegt, gemessen nach DIN EN 1242. Man erhält so einen gebrauchsfertigen Harz-Masterbatch.

### B) Harzmischungen

### B1) Verwendung von Tetramethylendiisocyanat (TMDI)

### Beispiel B1.1

380g des Harzmasterbatch, hergestellt gemäß Beispiel A1.1 werden bei 50°C mit 100g 1,4-Butandioldimethacrylat (BDDMA) sowie mit 2g *tert*-Butyl-Brenzkatechin (tBBK) versetzt und die Gelzeit anschließend bei Raumtemperatur auf 6min unter Zugabe eines aromatischen Amins eingestellt. Man erhält so eine gebrauchsfertige lagerstabile Harzmischung.

### Beispiel B1.2

350g des Harzmasterbatch, hergestellt gemäß Beispiel A1.2 werden bei 50°C mit 90g BDDMA sowie mit 2g tBBK versetzt und die Gelzeit anschließend bei Raumtemperatur auf 6min unter Zugabe eines aromatischen Amins eingestellt. Man erhält so eine gebrauchsfertige lagerstabile Harzmischung.

### B2) Verwendung von Hexamethylendiisocyanat (HMDI)

### Beispiel B2.1

380g des Harzmasterbatch, hergestellt gemäß Beispiel A2.1 werden bei 50°C mit 100g BDDMA sowie mit 2g tBBK versetzt und die Gelzeit anschließend bei Raumtemperatur auf 6min unter Zugabe eines aromatischen Amins eingestellt. Man erhält so eine gebrauchsfertige lagerstabile Harzmischung.

### Beispiel B2.2

360g des Harzmasterbatch, hergestellt gemäß Beispiel A2.2 werden bei 50°C mit 90g BDDMA sowie mit 2g tBBK versetzt und die Gelzeit anschließend bei Raumtemperatur auf 6min unter Zugabe eines aromatischen Amins eingestellt. Man erhält so eine gebrauchsfertige lagerstabile Harzmischung.

### B3) Verwendung von Decamethylendiisocyanat (DMDI)

### Beispiel B3.1

300g des Harzmasterbatch, hergestellt gemäß Beispiel A3.1 werden bei 50°C mit 40g BDDMA sowie mit 2g tBBK versetzt und die Gelzeit anschließend bei Raumtemperatur auf 6min unter Zugabe eines aromatischen Amins eingestellt. Man erhält so eine gebrauchsfertige lagerstabile Harzmischung.

## Patentansprüche

1. Verfahren zur Herstellung von Urethan(meth)acrylatharzen bei dem eine Dianhydrohexitol-Verbindung mit einem Diisocyanat in Gegenwart einer monomeren radikalisch co-polymerisierbaren Verbindung als Lösungsmittels umgesetzt wird und das Produkt mit einem Hydroxy-substituierten (Meth)acrylat umgesetzt wird.

2. Verfahren nach Anspruch 1, wobei die monomere radikalisch polymerisierbare Verbindung unter 1,4-Butandioldi(meth)acrylat, Propylenglykoldi(meth)acrylat, Tetrahydrofuryl(meth)acrylat oder (2,2-Dimethyl-1,3-dioxolan-4-yl)methyl(meth)acrylat ausgewählt ist.

3. Verfahren nach Anspruch 1 oder 2, wobei pro Mol Dianhydrohexitol-Verbindung mindestens zwei Mole Diisocyanat eingesetzt werden.

4. Verfahren nach einem der vorhergehenden Ansprüche, wobei die Dianhydrohexitol-Verbindung unter Isosorbid, Isomannit oder Isoidid ausgewählt ist.

5. Verfahren nach einem der vorhergehenden Ansprüche, wobei das Diisocyanat ein aliphatisches Diisocyanat ist.

6. Verfahren nach einem der vorhergehenden Ansprüche, wobei das Hydroxy-substituierte (Meth)acrylat ein Hydroxyalkyl(meth)acrylat ist.

7. Verfahren nach einem der vorhergehenden Ansprüche, wobei die Reaktion in Stufe (I) solange fortgesetzt wird, bis die Umsetzung nahezu vollständig ist.

8. Verfahren nach einem der vorhergehenden Ansprüche, wobei die Reaktion in Stufe (II) solange fortgesetzt wird, bis der Restisocyanatgehalt unter 0,2 %, gemessen nach DIN EN 1242, gesunken ist.

9. Verfahren nach einem der vorhergehenden Ansprüche, wobei die Ausgangsverbindungen aus Grundchemikalien auf Basis nachwachsender Rohstoffe erhältlich sind.

10. Urethan(meth)acrylatharz erhalten nach einem Verfahren gemäß einem der Ansprüche 1bis 9.

11. Verwendung des Urethan(meth)acrylatharzes gemäß Anspruch 10 als Bindemittel in radikalisch härtbaren Harzmischungen.

12. Verwendung des Urethan(meth)acrylatharzes gemäß Anspruch 10 als Bindemittel in radikalisch härtbaren Reaktionsharzmörtel-Zusammensetzungen.

13. Verwendung nach Anspruch 11 oder nach Anspruch 12 zur chemischen Befestigung.

## Claims

1. Method for producing urethane (meth)acrylate resins, in which a dianhydrohexitol compound is converted with a diisocyanate in the presence of a monomeric radically co-polymerisable compound as solvent and the product is converted with a hydroxy-substituted (meth)acrylate.

2. Method according to claim 1, in which the monomeric radically polymerisable compound is selected from 1,4-butanediol di(meth)acrylate, propylene glycol di(meth)acrylate, tetrahydrofuryl (meth)acrylate or (2,2-dimethyl-1,3-dioxolan-4-yl)methyl (meth)acrylate.

3. Method according to claim 1 or 2, in which at least two moles of diisocyanate are used per mole of dianhydrohexitol compound.

4. Method according to one of the previous claims, in which the dianhydrohexitol compound is selected from isosorbide, isomannite or isoidide.

5. Method according to one of the previous claims, in which the diisocyanate is an aliphatic diisocyanate.

6. Method according to one of the previous claims, in which the hydroxy-substituted (meth)acrylate is a hydroxyalkyl (meth)acrylate.

7. Method according to one of the previous claims, in which the reaction in step (I) is continued until the conversion is almost complete.

8. Method according to one of the previous claims, in which the reaction in step (I) is continued until the residual isocyanate content has fallen below 0.2%, measured according to DIN EN 1242.

9. Method according to one of the previous claims, in which the initial compounds may be obtained from basic chemicals based on renewable raw materials.

10. Urethane (meth)acrylate resin obtained according to a method according to one of claims 1 to 9.

11. Use of the urethane (meth)acrylate resin according to claim 10 as binder in radically hardenable resin mixtures.

12. Use of the urethane (meth)acrylate resin according to claim 10 as binder in radically hardenable reaction resin mortar compounds.

13. Use according to claim 11 or according to claim 12 for chemical fixing.

## Revendications

1. Procédé pour produire des résines de (méth)acrylate d'uréthane dans lequel un composé dianhydrohexitol réagit avec un diisocyanate en présence d'un composé monomère copolymérisable par voie radicalaire en tant que solvant et le produit réagit avec un (méth)acrylate hydroxy-substitué.

2. Procédé selon la revendication 1, dans lequel le composé monomère polymérisable par voie radicalaire est choisi parmi 1,4-butandiol di(méth)acrylate, propylène glycol-di(méth)acrylate, tétrahydrofury(méth)acrylate ou (2,2-diméthyl-1,3-dioxolan-4-(yl)méthyl(méth)acrylate.

3. Procédé selon la revendication 1 ou 2, dans lequel au moins deux moles de diisocyanate sont utilisées pour une mole de composé dianhydrohexitol.

4. Procédé selon l'une des revendications précédentes, dans lequel le composé dianhydrohexitol est choisi parmi l'isosorbide, l'isomannite ou l'isoidide.

5. Procédé selon l'une des revendications précédentes, dans lequel le diisocyanate est un diisocyanate aliphatique.

6. Procédé selon l'une des revendications précédentes, dans lequel le (méth)acrylate hydroxy-substitué est un hydroxyalkyl(méth)acrylate.

7. Procédé selon l'une des revendications précédentes, dans lequel la réaction à l'étape (I) est poursuivie jusqu'à ce que la conversion soit pratiquement complète.

8. Procédé selon l'une des revendications précédentes, dans lequel la réaction à l'étape (II) est poursuivie jusqu'à ce que la teneur résiduelle en isocyanate, mesurée selon DIN EN 1242, ait chuté sous 0,2 %.

9. Procédé selon l'une des revendications précédentes, dans lequel les composés de départ peuvent être obtenus à partir de produits chimiques de base basés sur des matières premières renouvelables.

10. Résine de (méth)acrylate d'uréthane obtenue selon un procédé selon l'une des revendications 1 à 9.

11. Utilisation de la résine de (méth)acrylate d'uréthane selon la revendication 10 en tant que liant dans des mélanges de résines durcissables par voie radicalaire.

12. Utilisation de la résine de (méth)acrylate d'uréthane selon la revendication 10 en tant que liant dans des compositions de mortier de résine réactive durcissables par voie radicalaire.

13. Utilisation selon la revendication 11 ou selon la revendication 12 pour la fixation chimique.
